# FASCICULE DE BREVET EUROPEEN

(11) **EP 0 410 866 B1**
(45) Date de publication et mention de la délivrance du brevet: **08.06.1994**
(21) Numéro de dépôt: 90402116.9
(22) Date de dépôt: 24.07.1990
(51) Int. Cl.: H02M 3/28, H02J 3/46

(54) **Dispositif convertisseur d'énergie à sorties multiples**
Vorrichtung für Energieumwandlung mit Mehrfachausgang
Multioutput power converter

(30) Priorité: 28.07.1989 FR 8910204
(43) Date de publication de la demande: 30.01.1991
(73) Titulaire: BULL S.A., 92800 Puteaux (FR)
(72) Inventeur: Paladel, Jean-Marie, F-38640 Claix (FR)
(74) Mandataire: Colombe, Michel

(56) Documents cités:
- EP-A- 0 257 101
- EP-A- 0 302 679
- CH-A- 659 156
- PESC'88 Rec. 19th Annual IEEE Power Electronics Specialists Conference vol. 2, 14 avril 1988, New York, US pages 1043 - 1050; N. Takata et al.: "Boost converter system with battery discharge currents equalizer"
- PATENT ABSTRACTS OF JAPAN vol. 6, no. 212 (P-151)(1090) 26 octobre 1982 ; & JP-A-57 120 131

## Description

La présente invention concerne un dispositif convertisseur d'énergie à sorties multiples, constitué de deux ou plusieurs convertisseurs similaires branchés en parallèle, de façon qu'il y ait partage équitable de la charge entre les divers convertisseurs, et cela sur chacune des sorties.

Il existe des dispositifs convertisseurs à sortie unique permettant de connecter en parallèle les sorties de deux ou plusieurs convertisseurs d'énergie de façon à garantir un partage équitable des courants de sortie de chaque convertisseur.

A cet effet, la commande de régulation des convertisseurs est effectuée par un circuit de régulation dont le signal de commande dépend des courants mesurés en sortie de chaque convertisseur pour commander en entrée les circuits de découpage de l'alimentation. Un tel dispositif est connu par la demande de brevet EP 0 302 679.

Toutefois, lorsque l'on veut connecter en parallèle les tensions de sorties homologues de deux ou plusieurs convertisseurs à sorties multiples, il devient difficile de garantir un partage équitable des courants de sortie homologues entre les convertisseurs.

Un premier but de l'invention est donc de résoudre ce problème.

Ce but est atteint par le fait que le dispositif convertisseur d'énergie à sorties multiples comprend au moins deux convertisseurs d'énergie à sorties multiples, une première sortie d'un premier convertisseur étant branchée en parallèle avec une sortie homologue d'un autre convertisseur pour alimenter une première charge, et comporte un premier circuit de régulation délivrant aux convertisseurs un signal de commande fonction du courant débité dans la première charge branchée sur une première sortie de chaque convertisseur, et au moins un autre circuit de régulation délivrant à chaque entrée de commande des régulateurs de sortie (post-régulateurs) branchés entre chaque sortie homologue, autre que la première de chaque convertisseur, et une autre charge, une commande fonction du courant débité dans l'autre charge.

Selon une autre particularité, la première commande fonction du courant dépend du courant d'entrée (Iₚ₁, Iₚ₂) de chaque convertisseur (4, 5).

Selon une autre particularité, la première commande fonction du courant dépend des courants de sortie (Iₛ₁₂, Iₛ₁₁, Iₛ₂₁ Iₛ₂₂) débités dans une charge branchée sur chaque sortie de chaque convertisseur.

Selon une autre particularité, le premier et l'autre circuit de régulation comportent un circuit soustracteur pour retrancher de la tension de référence la tension mesurée aux bornes de la charge respective, un amplificateur du signal d'erreur délivré par la sortie du soustracteur et un deuxième circuit soustracteur pour retrancher du signal de sortie de l'amplificateur une tension représentative de l'intensité du courant débité par le convertisseur dans la charge respective.

Selon une autre particularité, le régulateur de sortie (post-régulateur) est linéaire.

Ce type de régulateur de sortie (post-régulateur) linéaire est constitué d'un transistor MOS (ou bipolaire) ballast qui absorbe l'excés de tension de sortie du secondaire du convertisseur et dont la grille (la base) est commandée par le signal de commande.

Selon une autre particularité, le circuit du régulateur de sortie (post-régulateur) est un interrupteur électronique branché en sortie du secondaire et commandé par un circuit de modulation de largeur d'impulsions dont l'entrée reçoit le signal de sortie du circuit de régulation.

D'autres caractéristiques et avantages de la présente invention apparaîtront plus clairement à la lecture de la description ci-après faite en référence aux dessins annexés dans lesquels :

La figure 1 représente le schéma de principe du dispositif convertisseur selon l'invention.

La figure 2 représente le schéma de principe d'un deuxième mode de réalisation de l'invention.

La figure 3 représente le schéma de principe des dispositifs de l'art antérieur.

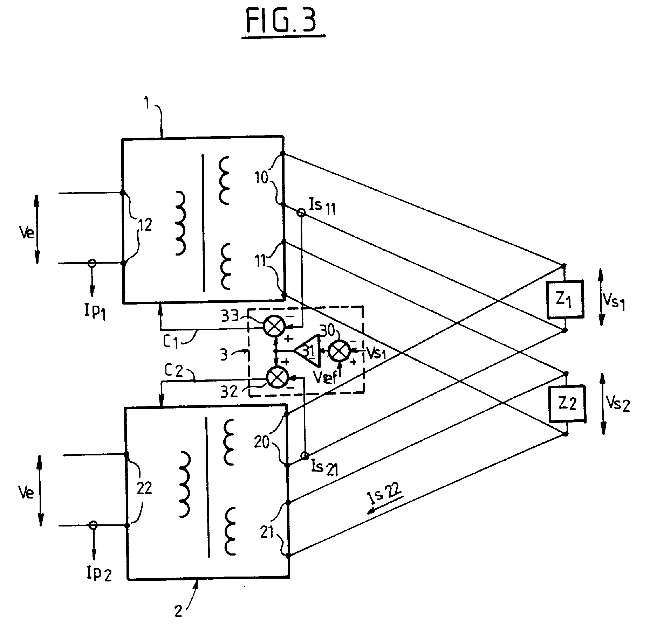

Un schéma connu représenté à la figure 3 permet de connecter en parallèle les sorties de deux ou plusieurs convertisseurs d'énergie (1, 2) à sorties multiples (10, 11, 20, 21) tout en essayant de garantir un partage équitable des courants de sortie entre les convertisseurs. C'est le cas lorsque l'on veut connecter en parallèle les tensions de sortie homologue correspondant aux sorties (10, 20) pour les deux convertisseurs (1, 2) et aux sorties (11, 21) pour ces mêmes convertisseurs tout en essayant de garantir un partage équitable du courant fourni par ces sorties en fonction des charges différentes (Z₁) branchée en parallèle sur les sorties (10, 20) et respectivement (Z₂) branchée sur les sorties (11, 21).

Comme représenté à la figure 3, il est possible de réguler le courant de sortie (Iₛ₁₁) fourni par la première sortie (10) du premier convertisseur (1) et le courant de sortie (Iₛ₂₁) fourni par la première sortie (20, sortie homologue) du deuxième convertisseur (2) par le circuit de commande (3). Ce circuit de commande fournit le premier signal de commande (C₁) permettant d'assurer la commande du dispositif de découpage de la tension d'alimentation (Vₑ) du premier convertisseur (1) disponible aux bornes (12) de l'entrée de ce convertisseur et un deuxième signal de commande (C₂) permettant également de commander le circuit de découpage de la tension d'alimentation (Vₑ) présente aux bornes d'entrée (22) du deuxième convertisseur (2).

Ce circuit (3) est constitué d'un premier dispositif soustracteur (30) recevant sur son entrée négative le signal de tension (Vₛ₁) correspondant à la tension aux bornes de la première charge (Z₁) et sur son entrée positive un signal de tension de référence (V_{ref}).

La sortie de ce premier soustracteur (30) est envoyée sur un circuit amplificateur d'erreurs (31), amplifiant le signal d'erreur et dont la sortie est branchée à chacune des entrées positives de deux autres circuits soustracteurs (32, 33). Les entrées négatives de ces circuits soustracteurs (32, 33) reçoivent respectivement un signal (Iₛ₁₁) représentant le courant débité par la première sortie (10) du premier convertisseur dans la charge (Z₁) et un signal (Iₛ₂₁) représentant respectivement le courant débité par la première sortie ou sortie homologue du deuxième convertisseur (2) dans la charge (Z₁).

La sortie du circuit soustracteur (33) recevant sur son entrée négative le courant (Iₛ₁₁) est envoyée sur le circuit de commande de découpage de la tension d'entrée du premier convertisseur. De même la sortie du deuxième soustracteur (32) est envoyée sur le circuit de commande de découpage de la tension d'entrée du deuxième convertisseur (2).

Par ce montage, on peut garantir que les courants dans la charge (Z₁), fournis respectivement par la première sortie du premier convertisseur et la sortie homologue du deuxième convertisseur, sont dans un rapport connu. Par contre, rien ne garantit un équilibrage des courants fournis par la deuxième sortie de chacun des convertisseurs à la deuxième charge (Z₂). Ce circuit ne permet pas de réaliser un partage équitable de la charge entre convertisseurs. Par partage équitable de la charge entre convertisseurs, on entend, selon le cas, égalité des courants fournis si les convertisseurs sont de même puissance, ou proportionnalité à leurs possibilités respectives si ce n'est pas le cas.

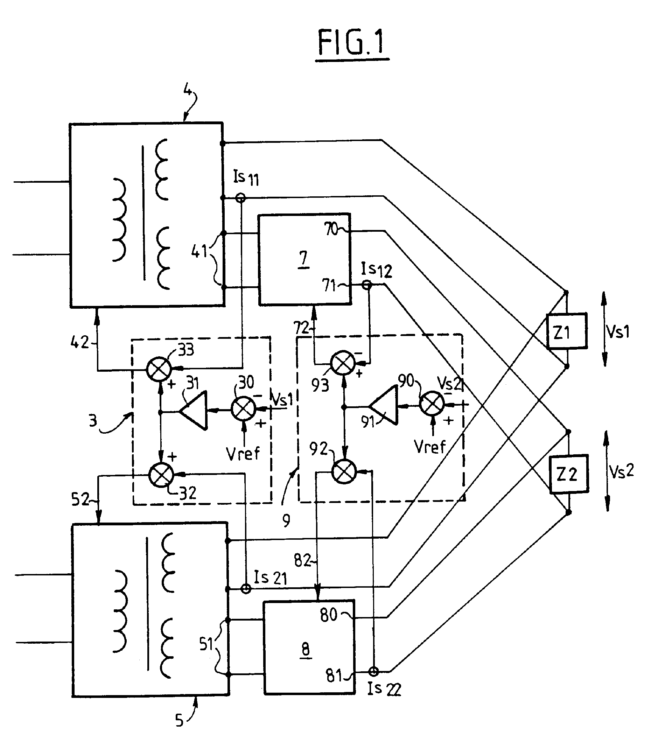

Le premier mode de réalisation de l'invention, représenté à la figure 1, permet d'apporter une réponse à ce problème posé par la mise en parallèle d'au moins deux convertisseurs à sorties multiples.

En effet, dans le circuit représenté à la figure 1, on retrouve le dispositif de régulation (3) de l'art antérieur pour réguler le premier convertisseur (4) et le deuxième convertisseur (5).

Le circuit 3 est identique à celui de la figure 3 correspondant à l'art antérieur, et branché de façon identique au branchement de la figure 3 sur les convertisseurs (4) et (5).

Ainsi, la sortie (42) du soustracteur (33) commande le circuit de découpage du convertisseur (4), alors que la sortie (52) du soustracteur (32) commande le circuit de découpage du convertisseur (5).

Pour résoudre le problème ci-dessus, on branche à chaque sortie supplémentaire à la première sortie de chaque convertisseur un dispositif régulateur de sortie (post-régulateur).

Ainsi, la deuxième sortie (41) du premier convertisseur (4) est connectée à un régulateur de sortie (post-régulateur) (7), dont les sorties (70, 71) sont reliées aux deux bornes de la charge (Z₂).

De même, la deuxième sortie (51) du second convertisseur (5) est branchée à un régulateur de sortie (post-régulateur) (8), dont les sorties (80, 81) sont reliées aux deux bornes de la charge (Z₂).

La sortie (71) est branchée en parallèle à la sortie (81). Un signal (Iₛ₁₂), proportionnel au courant débité par la sortie (71), et un signal (Iₛ₂₂), proportionnel au courant débité par la sortie (81), sont envoyés respectivement vers l'entrée négative d'un premier soustracteur (93) et l'entrée négative d'un deuxième soustracteur (92). Ces deux soustracteurs reçoivent chacun sur les entrées positives la sortie d'un amplificateur (91) délivrant un signal d'erreur de tension.

Ce signal d'erreur de tension est élaboré à l'entrée de l'amplificateur (91) par un circuit soustracteur (90) qui reçoit sur son entrée positive une tension de référence et sur son entrée négative la tension prélevée aux bornes de la charge (Z₂).

Les circuits régulateurs de sortie (post-régulateurs) (7) et (8) peuvent être linéaires et dans ce cas constitués par un transistor ballast MOS (ou bipolaire) qui absorbe l'excés de tension de sortie du secondaire (41) respectivement (51) et dont la grille (la base) est commandée par le signal de commande respectif (72, 82).

Dans un autre mode de réalisation, le circuit régulateur de sortie (post-régulateur) peut être un interrupteur électronique branché en sortie du secondaire et commandé par un circuit de modulation de largeur d'impulsion dont l'entrée reçoit le signal de sortie respectif (72, 82) du circuit de régulation.

La description ci-dessus a été faite dans le cadre de deux convertisseurs présentant deux sorties, mais il est bien évident que le principe de l'invention peut également s'appliquer à deux convertisseurs présentant m sorties ou encore à n convertisseurs présentant m sorties et branchées en parallèle. Dans ce cas on utilisera : n x (m - 1) régulateurs de sortie (post-régulateurs).

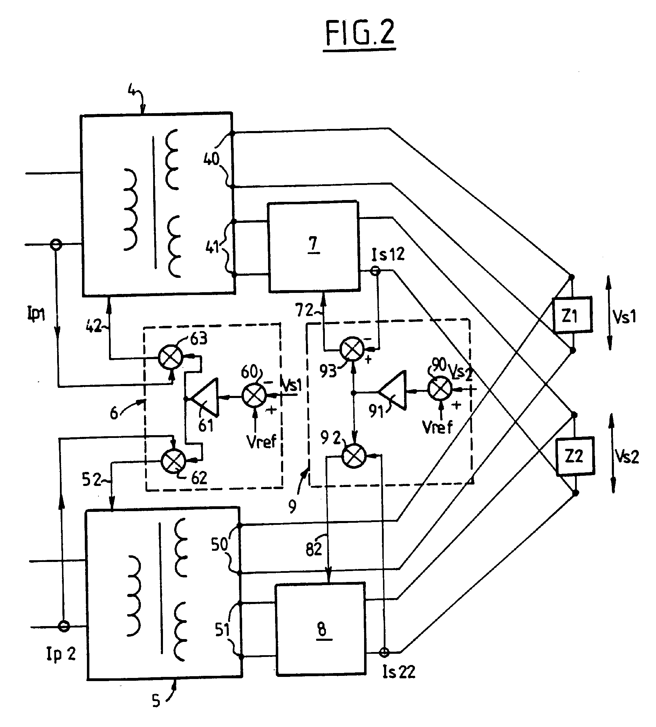

La figure 2 représente une deuxième variante de l'invention dans laquelle les deux premières boucles de régulation en courant du premier étage de sortie de chaque convertisseur sont commandées non plus en fonction des courants de sortie de ces étages, mais en fonction des courants d'entrées (Iₚ₁) et (Iₚ₂) des convertisseurs.

Ainsi, dans ce cas, le dispositif soustracteur (63) reçoit sur son entrée négative le courant d'entrée (Iₚ₁) du premier convertisseur (4) et sur son entrée positive la sortie d'un amplificateur (61) dont l'entrée reçoit un signal représentant l'erreur de tension.

Ce signal d'erreur de tension est élaboré par un circuit soustracteur (60) recevant sur son entrée positive la tension de référence et sur son entrée négative la tension aux bornes de la charge (Z₁).

De même le convertisseur (5) est commandé par la sortie (52) fournie par un circuit soustracteur (62) dont l'entrée négative re oit le courant (Iₚ₂) d'entrée du convertisseur (5) et à l'entrée positive la sortie du circuit amplificateur (61).

Un tel montage permet de simplifier la circuiterie, en particulier à cause du problème d'isolement, etc...

Ainsi, les circuits de régulation, tels que 3, 6, 9 peuvent appartenir indifféremment à l'un quelconque des convertisseurs ou être répartis entre eux.

## Revendications

1. Dispositif convertisseur d'énergie à sorties multiples comprenant au moins deux convertisseurs (4, 5) d'énergie à sorties multiples, une première sortie (40) d'un premier convertisseur (4) étant branchée en parallèle avec la sortie homologue (50) d'un autre convertisseur (5) pour alimenter une première charge (Z₁), un premier circuit de régulation (3) délivrant aux convertisseurs (4, 5) un signal de commande fonction du courant débité dans la première charge (Z₁), caractérisé en ce qu'il comporte au moins un autre circuit de régulation (9) délivrant à chaque entrée de commande de régulateurs de sortie (post-régulateurs) (7, 8) branchés entre chaque sortie homologue autre que la première de chaque convertisseur et une autre charge (Z₂), une commande fonction du courant débité par chaque sortie de convertisseur dans l'autre charge.

2. Dispositif selon la revendication 1, caractérisé en ce que la première commande fonction du courant dépend du courant d'entrée (Iₚ₁, Iₚ₂) de chaque convertisseur (4, 5).

3. Dispositif convertisseur selon la revendication 1, caractérisé en ce que la première commande fonction du courant dépend des courants de sortie (Iₛ₁₂, Iₛ₁₁, Iₛ₂₁, Iₛ₂₂) débités dans une charge branchée sur les sorties correspondantes de chaque convertisseur.

4. Dispositif selon l'une des revendications 1 à 3, caractérisé en ce que chaque circuit de régulation comporte un circuit soustracteur (90, 30) pour retrancher de la tension de référence (V_{ref}) la tension (Vₛ₁, Vₛ₂) mesurée aux bornes de chaque charge, un amplificateur (31, 91) du signal d'erreur délivré par la sortie du circuit soustracteur et un deuxième circuit soustracteur (33, 93, 32, 92) pour retrancher du signal de sortie de l'amplificateur une tension représentative de l'intensité (Iₛ₁₁, Iₛ₁₂, Iₛ₂₁, Iₛ₂₂) débitée par la sortie respective du convertisseur branchée à la charge respective.

5. Dispositif selon l'une des revendications 1 à 4, caractérisé en ce que le circuit régulateur de sortie (post-régulateur) (7, 8) est un transistor ballast MOS qui absorbe l'excés de tension de sortie du secondaire (41, 51) du convertisseur (4, 5) et dont la grille est commandée par le signal (72, 82) de commande fourni par le circuit de régulation (7, 8).

6. Dispositif selon l'une des revendications 1 à 4, caractérisé en ce que le circuit régulateur de sortie (post-régulateur) (7, 8) est un transistor bipolaire qui absorbe l'excés de tension de sortie du secondaire (41, 51) du convertisseur (4, 5) et dont la base est commandée par le signal (72, 82) de commande fourni par le circuit de régulation (7, 8).

7. Dispositif selon l'une des revendications 1 à 6, caractérisé en ce que le circuit de régulateur de sortie (post-régulateur) (7, 8) est un interrupteur électronique branché en sortie du secondaire du convertisseur (4, 5) et commandé par un circuit de modulation de largeur d'impulsion dont l'entrée reçoit le signal de commande (72, 82) fourni par la sortie du circuit de régulation.

## Patentansprüche

1. Energiewandlervorrichtung mit mehreren Ausgängen, die wenigstens zwei Energiewandler (4, 5) mit mehreren Ausgängen aufweist, wobei ein erster Ausgang (40) eines ersten Wandlers (4) mit dem homologen Ausgang (50) eines weiteren Wandlers (50) parallel geschaltet ist, um eine erste Last (Z₁) zu versorgen, wobei eine erste Regelungsschaltung (3) an die Wandler (4, 5) ein Steuersignal ausgibt, das von dem in die erste Last (Z₁) abgegebenen Stroms abhängt, dadurch gekennzeichnet, daß sie wenigstens eine weitere Regelungsschaltung (9) aufweist, die an jeden Steuereingang von Ausgangsregelungseinrichtungen (Nachregelungseinrichtungen) (7, 8), die zwischen jeden vom ersten Ausgang eines jeden Wandlers verschiedenen, homologen Ausgang und eine weitere Last (Z₂) geschaltet sind, einen Befehl liefert, der von dem Strom abhängt, der von jedem Ausgang des Wandlers in die weitere Last abgegeben wird.

2. Vorrichtung gemäß Anspruch 1, dadurch gekennzeichnet, daß der erste vom Strom abhängige Befehl vom Eingangsstrom (Iₚ₁, Iₚ₂) eines jeden Wandlers (4, 5) abhängt.

3. Wandlervorrichtung gemäß Anspruch 1, dadurch gekennzeichnet, daß der erste vom Strom abhängige Befehl von Ausgangsströmen (Iₛ₁₂, Iₛ₁₁, Iₛ₂₁, Iₛ₂₂) abhängt, die in eine Last abgegeben werden, die an die entsprechenden Ausgänge eines jeden Wandlers angeschlossen ist.

4. Vorrichtung gemäß einem der Ansprüche 1 bis 3, dadurch gekennzeichnet, daß jede Regelungsschaltung versehen ist mit einer Subtraktionsschaltung (90, 30), um von der Referenzspannung (V_{ref}) die Spannung (V_{S1}, V_{S2}) abzuziehen, die an den Anschlüssen einer jeden Last gemessen wird, einem Verstärker (31, 91) für das vom Ausgang der Subtraktionsschaltung gelieferte Fehlersignal und einer zweiten Subtraktionsschaltung (33, 93, 32, 92), um vom Ausgangssignal des Verstärkers eine Spannung abzuziehen, die die Intensität (Iₛ₁₁, Iₛ₁₂, Iₛ₂₁, Iₛ₂₂) darstellt, die vom jeweiligen Ausgang des Wandlers abgegeben wird, welcher an die entsprechende Last angeschlossen ist.

5. Vorrichtung gemäß einem der Ansprüche 1 bis 4, dadurch gekennzeichnet, daß die Ausgangsregelungsschaltung (Nachregelungseinrichtung) (7, 8) ein MOS-Vorschalttransistor ist, der die überschüssige Ausgangsspannung der Sekundärwicklung (41, 51) des Wandlers (4, 5) absorbiert und dessen Gate von dem Steuersignal (72, 82) gesteuert wird, das von der Regelungsschaltung (7, 8) geliefert wird.

6. Vorrichtung gemäß einem der Ansprüche 1 bis 4, dadurch gekennzeichnet, daß die Ausgangsregelungsschaltung (Nachregelungseinrichtung) (7, 8) ein bipolarer Transistor ist, der die überschüssige Ausgangsspannung der Sekundärwicklung (41, 51) des Wandlers (4, 5) absorbiert und dessen Basis von dem Steuersignal (72, 82) gesteuert wird, das von der Regelungsschaltung (7, 8) geliefert wird.

7. Vorrichtung gemäß einem der Ansprüche 1 bis 6, dadurch gekennzeichnet, daß die Ausgangsregelungsschaltung (Nachregelungseinrichtung) (7, 8) ein elektronischer Ein-Aus-Schalter ist, der an den Ausgang der Sekundärwicklung des Wandlers (4, 5) angeschlossen ist und von einer Impulsbreiten-Modulationsschaltung gesteuert wird, deren Eingang das Steuersignal (72, 82) empfängt, das vom Ausgang der Regelungsschaltung geliefert wird.

## Claims

1. An energy converter device with multiple outputs comprising at least two energy converters (4, 5) with multiple outputs, a first output (40) of a first converter (4) being connected in parallel with the homologous output (50) of another converter (5) in order to supply a first load (Z₁), a first regulating circuit (3) delivering to the converters (4, 5) a control signal which is a function of the current delivered to the first load (Z₁), characterised in that it comprises at least one other regulating circuit (9) delivering to each control input of output regulators (post-regulators) (7, 8) connected between each homologous output other than the first one of each converter and another load (Z₂), a control signal which is a function of the current delivered by each converter output to the other load.

2. A device according to Claim 1, characterised in that the first control signal which is a function of the current depends on the input current (Iₚ₁, Iₚ₂) of each converter (4, 5).

3. A converter device according to Claim 1, characterised in that the first control signal which is a function of the current depends on the output currents (Iₛ₁₂, Iₛ₁₁, Iₛ₂₁, Iₛ₂₂) delivered to a load connected to the corresponding outputs of each converter.

4. A device according to one of Claims 1 to 3, characterised in that each regulating circuit comprises a subtractor circuit (90, 30) in order to subtract from the reference voltage (V_{ref}) the voltage (Vₛ₁, Vₛ₂) measured at the terminals of each load, an amplifier (31, 91) for the error signal delivered by the output of the subtractor circuit and a second subtractor circuit (33, 93, 32, 92) in order to subtract from the output signal of the amplifier a voltage representing the current (Iₛ₁₁, Iₛ₁₂, Iₛ₂₁, Iₛ₂₂) delivered by the respective output of the converter connected to the respective load.

5. A device according to one of Claims 1 to 4, characterised in that the output regulating circuit (post-regulator) (7, 8) is an MOS ballast transistor which absorbs the excess output voltage from the secondary (41, 51) of the converter (4, 5), the gate of which is controlled by the control signal (72, 82) supplied by the regulating circuit (7, 8).

6. A device according to one of Claims 1 to 4, characterised in that the output regulating circuit (post-regulator) (7, 8) is a bipolar transistor which absorbs the excess output voltage from the secondary (41, 51) of the converter (4, 5), the base of which is controlled by the control signal (72, 82) supplied by the regulating circuit (7, 8).

7. A device according to one of Claims 1 to 6, characterised in that the output regulating circuit (post-regulator) (7, 8) is an electronic switch connected at the output of the secondary of the converter (4, 5) and controlled by a pulse width modulation circuit, the input of which receives the control signal (72, 82) supplied by the output of the regulation circuit.
